# EUROPEAN PATENT SPECIFICATION

(11) **EP 2 530 414 B1**
(45) Date of publication and mention of the grant of the patent: **28.06.2017**
(21) Application number: 12168492.2
(22) Date of filing: 18.05.2012
(51) Int. Cl.: F25D 17/04, F16K 17/04

(54) **Compensation valve for environments, such as a cold room, in which the pressure is different from atmospheric**
Kompensationsventil für Umgebungen wie Kühlräume, in denen der Druck nicht dem der Atmosphäre entspricht
Soupape de compensation pour environnements, tels qu'une chambre froide, dans laquelle la pression est différente de l'atmosphère

(30) Priority: 01.06.2011 IT MI20110189 U
(43) Date of publication of application: 05.12.2012
(73) Proprietor: IK-INTERKLIMAT SPA, 20153 Milano (IT)
(72) Inventor: Fabris, Carlo, 35013 Cittadella (PD) (IT)
(74) Representative: Ripamonti, Enrico

(56) References cited:
- EP-A1- 1 627 168
- WO-A2-2007/023471
- DE-A1- 4 304 649
- DE-A1-102008 021 375
- FR-A1- 2 778 447
- FR-A1- 2 932 239
- JP-A- H09 269 176
- JP-A- 2009 174 736

## Description

The present invention relates to a compensation valve in accordance with the introduction to the main claim.

In an environment in which the pressure is different from the external pressure, there is a known need to use at least one compensation valve disposed in at least one of its walls and arranged to connect the interior of such an environment to an external environment possibly at atmospheric pressure, in order to balance their pressure. In particular, an environment of the aforesaid type is defined by a controlled atmosphere chamber or by the interior of a cold room.

With particular reference to this latter, it is known to use in at least one of its walls a compensation valve adapted to balance the pressure of the cold room interior with the external pressure (for example atmospheric). As round holes tend generally to be made in the wall to simplify installation, known compensation valves usually have a hollow cylindrical body, generally closed by a grid on that side facing the environment external to the cold room and completely open on that side facing this latter; this body, (disposed with its axis perpendicular to the cold room wall) presents, in its interior, a passage intercepted by a valve element usually defined generically by a flap or panel movable relative to the opening through this passage. As this passage is cylindrical of circular cross-section, the panel cannot be of circular form such as to completely intercept the passage, while at the same time being able to move to enable it to be opened. Consequently it is known to make this panel of polygonal shape (for example square) and to insert it into a frame positioned inside said passage, this frame presenting a (circular) portion rigid with the passage wall and having an aperture of shape corresponding to that of the panel; when closed onto said aperture, this latter is disposed such as to be perpendicular to the passage longitudinal axis and parallel to the area in which the aperture is provided. In this manner, the panel can move relative to the frame within the passage by rotating about one or more hinges which connect it to the frame to enable the passage to be both opened and closed.

Although it enables the pressure inside the cold room to be balanced with the external pressure, this solution presents various drawbacks. One of these relates to the position of the movable panel within the passage interior, this position having to be vertical (with reference to the arrangement of the compensation valve, which has its passage longitudinal axis perpendicular to the cold room wall) in order to enable the panel to move correctly. This arrangement does not always result in optimal valve passage interception when the panel is closed onto the frame aperture; in this respect, the panel can remain slightly separated from the frame and enable moisture-rich atmospheric air to pass through the gap formed in this manner. In order to achieve security of movement of the flap or panel and prevent any ice formation which could cause it to stick to the edges of the frame aperture, a heating element (defined generally by an electrical resistor) is present on these edges, causing the moist air to heat up as it passes between the movable panel and the frame; when it penetrates into the cold room it tends to rise towards the upper wall or ceiling of this latter, and freeze. Hence actual ice formations are often created on the ceiling of the cold room, with possible danger to the operators or users entering it.

Another solution is also known in which the passage is closed by two semicircles movable about a passage diameter. However this solution considerably limits the air flow through the valve.

In addition the known solutions (because of the presence of the frame, on the aperture of which the movable panel is positioned) considerably limit the useful cross-section of the compensation valve passage through which the external air is able to enter the cold room in order to compensate the pressure therein. It follows that the speed of this compensation is low and the time required to achieve equilibrium between the pressure inside the cold room and the external pressure is relatively lengthy.

Finally, the known solutions create a turbulent air flow through the compensation valve, this flow being linked to the movement of the flap or movable panel inside its passage.

DE4304649 (A1) describes an automatic shut-off device for a gas-carrying pipe. With this device, excess pressure and vacuum in a tank which is connected to a pipe is avoided by at least one butterfly valve being provided in the pipe. The butterfly valve is mounted in the pipe on a pivot offset from its centre axis and is under dead load or spring load in such a way that it closes the pipe cross-section in its rest position (i.e. when the pressure is the same on both sides of the valve). This prior document also describes a solution according to which a first butterfly valve has an opening wherein a second butterfly valve is located. The two valves open along opposite orientations.

JP2009174736(A) provides an internal pressure adjustment device of a refrigerator, a freezer and the like according to the preamble of claim 1, capable of keeping heat conductivity of a relief valve for adjusting a pressure, and improving sealing performance of a frame material and the relief valve. The internal pressure adjustment device has a heat conductive frame body which is disposed in a communication port formed on a sidewall of a body of the refrigerator and the like. The device is provided with a valve port inclined to the communication port, and on which a heater wire is wound, and a heat conductive relief valve which is pivoted at an upper side of the valve port of the frame body. The valve is capable of opening and closing the valve port.

An object of the present invention is therefore to provide a compensation valve representing an improvement over known solutions.

A particular object of the present invention is to provide a compensation valve which, when required, allows optimal and secure closure of the passage connecting the interior of the variable pressure environment to the external environment.

A further object of the present invention is to provide a compensation valve which prevents moist air from passing into a cold room from the outside, so preventing ice forming on the walls of this latter, and requiring these walls to be cleaned.

A further object of the invention is to provide a compensation valve which, when opened to connect the cold room environment to the external environment, enables the air to undergo laminar flow between these environments along the most efficient path possible, so preventing turbulence which would result in an increase in pressure compensation times.

Another object is to provide a valve of the stated type which is silent in operation and enables high air flows.

These and other objects which will be apparent to the expert of the art are attained by a compensation valve in accordance with the accompanying claims.

The present invention will be better understood from the accompanying drawings, which are provided by way of non-limiting example and in which:

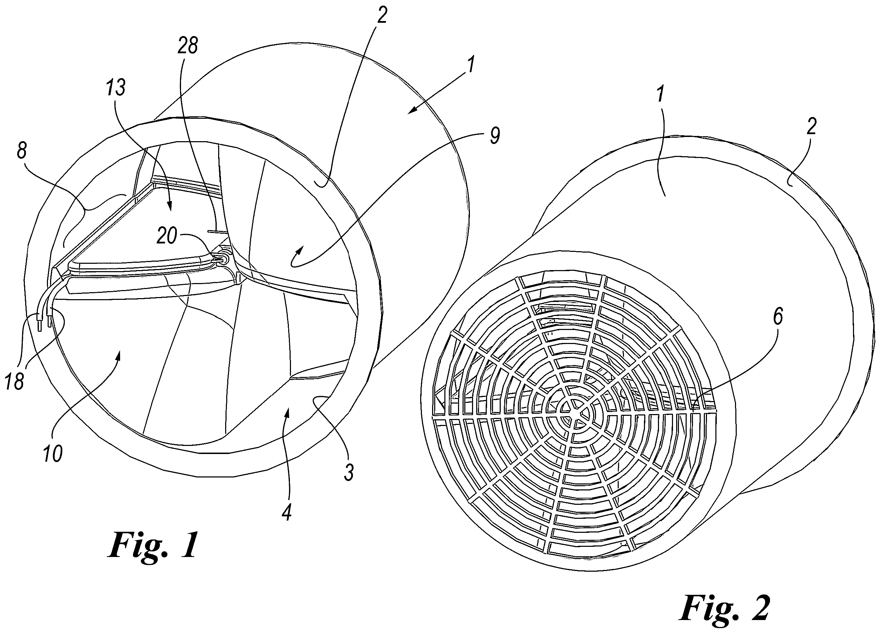

Figure 1 is a perspective view, seen from one side, of a compensation valve formed in accordance with the present invention;
Figure 2 is a view from the other side of the compensation valve of Figure 1;

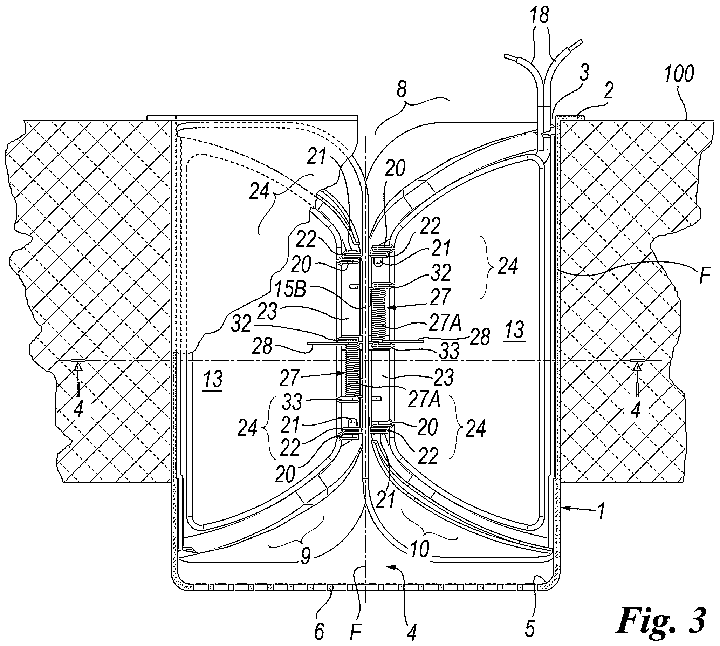

Figure 3 is a cross-section through the valve of Figure 1, shown in a working position;

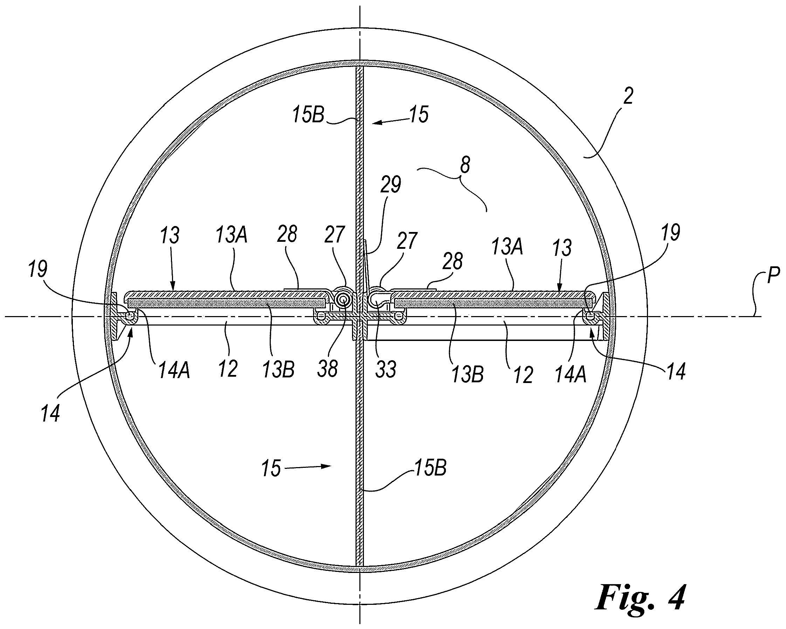

Figure 4 is a section on the line 4-4 of Figure 3, but with some parts omitted for greater clarity;

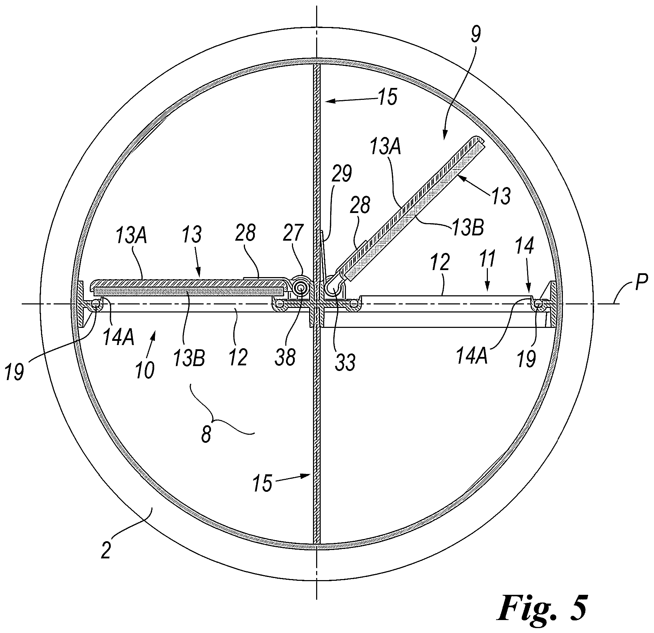

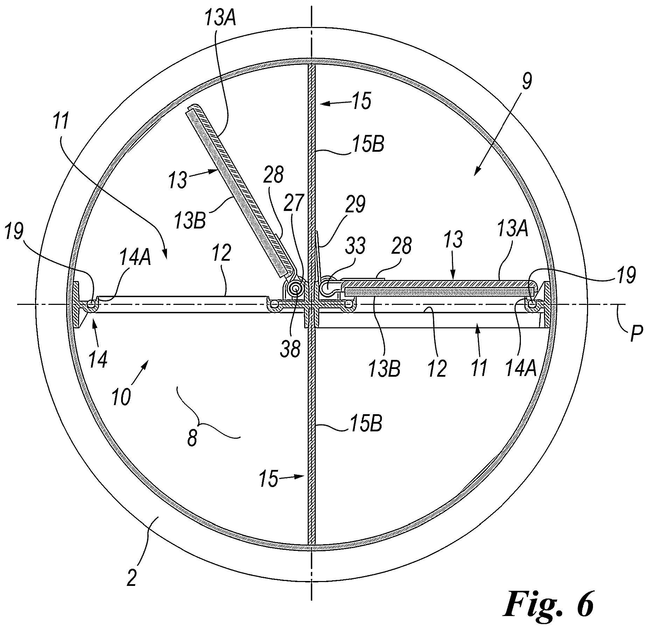

Figures 5 and 6 are views similar to the view of Figure 4, but with the valve in a different working position;

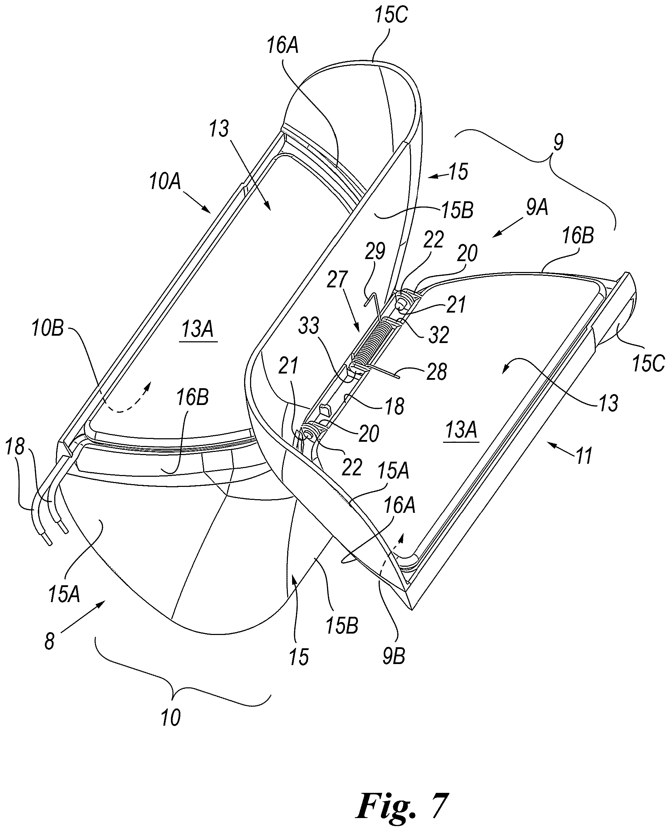

Figure 7 is a perspective view of the compensation valve in a working position, but with some parts omitted for greater clarity.

With reference to said figures, a compensation valve comprises a substantially cylindrical valve body 1 presenting at an open end 3 a flange 2 to face an environment (for example a cold room) in which the pressure is to be compensated. The flange 3 is adapted to rest against a wall 100 of the aforesaid environment such as to act as a limit stop for the insertion of the body of the compensation valve into a hole F formed in said wall and connecting the interior of said cold room to the environment at external pressure (lower or higher than that of the cold room or environment at controlled pressure). The wall 100 can be a vertical wall or the cold room ceiling.

The body 1 presents an internal passage 4 of circular cross-section opening at its end 3 and closed at its opposite end 5 by a grid portion 6. This end 5 is adapted to face the external pressure environment.

Inside the passage 4 a valve member 8 is present disposed longitudinally therein, i.e. along its longitudinal axis F. This valve member 8 comprises substantially a first and a second portion 9 and 10 which are identical and disposed symmetrically to each other; each portion (for example the first portion 9, the following description of which also applies to the second portion 10) presents an air passage zone 11 disposed in a plane P which "cuts" the passage 4 transversely and preferably contains the middle longitudinal axis F of this latter. In other words, the zone 11 lies in a plane perpendicular to the wall 100.

This zone is bounded on each upper side 9A and lower side 9B by a perimetral wall 15. This wall presents a first part 15A positioned in correspondence with a first smaller-extension side 16A of the portion 9 and substantially lying in a plane parallel to the wall 100, and a second part 15B substantially disposed along the axis F in correspondence with a larger-extension side 17 of the portion 9 connecting to a second smaller-extension side 16B. The part 15B is connected to a part 15C positioned in correspondence with the side 16 of the portion 10. A similar wall 15 is present at the lower side 9B (and 10B) of the portion 9 (and 10). The air passage zone 11 is substantially flat and presents a large aperture 12 on which a panel 13 of substantially the same size as said aperture movably lies. This aperture comprises an edge 14 (with a seal element 14A) on which the panel 13 rests; a scraper element 19 is present in correspondence with said edge to prevent ice formation on the edge, with consequent "sticking" of the panel thereon. The figures show the electrical connections 18 for electrically powering the heating element.

Each panel 13 of the portions 9 and 10 (which is movably positioned on their upper side 9A, 10A) comprises, at an end thereof adjacent to the part 15B of the wall 15, end flanges 20 each carrying a pin 21 to be inserted into a corresponding projection 22 rising from an edge 23 of the zone 11 close to the aperture 12 such as to define a hinge 24 about which the panel 13 can rotate.

This latter presents two opposing surfaces 13A and 13B, the surface 13B being adapted to cooperate with the aforesaid aperture 12. In one possible embodiment, the surface 13B can be formed by a seal element arranged to rest on the edge 14 and on the seal element 14A. In the embodiment shown in the figures, a torsion spring 27 positioned along the edge 23 of the aforesaid zone acts on the surface 13A. However, this spring could also not be used if the panel 13 moves only by gravity.

In the embodiment shown in the figures, the torsion spring 27 fixed to the panel 13 presents a wide portion 27A and is supported by a pin 38 fixed to lugs 32, 33 rigid with said panel. The spring presents end arms 28 and 29, the first arm 28 being adapted to rest on the surface 13A, the second arm 29 resting against the part 15B of the wall 15. In this manner, the torsion spring 27 opposes the opening of the panel 13.

Because of the manner in which the valve member is formed, the fact that the panels open towards the same direction (above the zone 11 of the panels 9 and 10) and the fact that the lower side 9B of the first portion 9 communicates with the interior of the cold room while the lower side 10B of the second portion 10 communicates with the external environment via the grid portion 6, means that the opening of the panel 13 of the second portion 10 takes place when the pressure in the cold room is less than the external pressure, to hence balance these pressures. Having attained this state, the spring 27 facilitates closure of this panel onto the corresponding aperture. If the spring is not present, closure takes place by gravity.

If for any reason the pressure in the cold room is instead greater than the external pressure, the panel 13 of the first portion 9 would open to balance the pressures. When one panel opens, the other obviously remains closed.

The valve member 8 is preferably inserted into the body 1 while maintaining the zone 11 in a horizontal plane such as to achieve optimal operation of the compensation valve. This member divides the passage into four "quadrants", each superposed pair of quadrants being connected via the aperture 12 to the interior of the cold room and to the external environment such as to enable air to flow from the exterior of the cold room to its interior. This flow passes through a large aperture 12 involving most of the zone 11.

Because of the manner in which it is formed, this member does not have a predefined direction for its insertion into the passage 4 of the body 1, but instead because of the symmetry of the portions 9 and 10 it can be inserted in any manner into that passage, while being careful to maintain the zones 11 in a horizontal plane.

By virtue of the invention and the fact that the interception panels 13 are positioned in a horizontal plane, they completely close onto the corresponding apertures 12. In addition, the corresponding springs 27 contribute to the closure of these panels onto the apertures 12, such as to prevent external moist air being able to pass through them into the cold room.

The invention enables proper moisture isolation of the environment at the pressure different from the external environment pressure, while at the same time allowing rapid pressure balancing with this latter.

A specific embodiment of the invention has been described. Others (in addition to those stated) are however possible and are to be considered as falling within the scope of the accompanying claims.

## Claims

1. A compensation valve for balancing the pressure of environments, such as a cold room, in which the pressure is different from the pressure of an external environment, such as an environment at atmospheric pressure, the environment at the different pressure to be balanced being bounded by walls (100), in at least one of which a through hole (100F) is provided containing the valve body (1), this valve body presenting an internal passage (4) opening at one end (3) into the environment at different pressure and communicating via the opposite end (5) with the exterior of said environment, said valve comprising in said passage (4) a valve member (8) presenting two apertures (12) able to connect together said ends (3, 5) of the valve body (1), a movable interception panel (13) being located on each of said apertures, each aperture (12) being provided within a corresponding zone (11) of the valve member (8), said zone (11) being disposed in a plane (P) within the passage (4) of the valve body (1), said plane being perpendicular to the wall (100) in which the valve is positioned, said movable panel (13) being provided on the aperture of the corresponding zone (11), said panel being hinged along an edge (23) of the zone defining this aperture, **characterised in that** the valve member (8) comprises a first and second portion (9, 10) which are identical and disposed symmetrically to each other, said portions dividing the passage into four "quadrants", each portion (9, 10) comprising a zone (11) with its aperture (12), each superposed pair of quadrants being alternatively connected via the corresponding aperture (12) to the interior of the environment and to the external environment such as to enable air to flow from the exterior of the environment to its interior or vice versa, the interception panels (13) positioned on the corresponding apertures (12) opening in the same direction about the plane (P) in which said zones (11) lie, each of said panel (13) lying on a horizontal plane that is a plane which is perpendicular to the environment wall (100) when the panel (13) closes said aperture (12).

2. A valve as claimed in claim 1, **characterised in that** each zone (11) provided with the aperture (12) forms part of a corresponding portion (9, 10) of said valve member (8), each panel (13) being movable in correspondence with an upper side (9A, 10A) of this portion, this portion comprising smaller-extension sides (16A, 16B) connected together by a larger-extension side (17), along one (16A) of the smaller-extension sides and along the larger-extension side (17) their rising a corresponding vertical wall (15), this wall (15) having a first part (15A) located along said one (16A) of the smaller-extension sides, said first part (15A) perpendicularly intercepting the passage (4), said vertical wall (15) having a second part (15B) disposed along a longitudinal axis (F) of said passage (4) and along the largest-extension side (17), said wall parts (15A, 15B) dividing the above cited passage (4) into the four quadrants, the panel (13) being hinged in proximity to the second wall part (15B), along the longitudinal axis (F), the valve member (8) comprising two identical portions (9, 10) disposed symmetrically about a plane perpendicular to the plane (P) in which each zone (11) provided with the aperture (12) and containing the middle longitudinal axis (F) of the valve body passage (4) lies these zones lying in the same plane (P).

3. A valve as claimed in claim 1, **characterised in that** the plane (P) in which the zone (11) of the valve member (8) provided with the aperture (12) lies contains the middle longitudinal axis (F) of the valve body passage (4).

4. A valve as claimed in claim 1, **characterised in that** a heating element (19) and a seal element (14A) are provided along the edge (14) of the aperture (12).

5. A valve as claimed in claim 1, **characterised in that** an elastic member (27) is provided to maintain the panel (13) closed onto the corresponding aperture (12) and to oppose its movement on it.

6. A valve as claimed in claim 1, **characterised in that** the elastic member is a torsion spring (27) disposed about a pin (38) carried by the panel (13) and positioned in correspondence with the edge (23) of the zone (11) defining the aperture (12) of this latter, said spring end arms (28, 29) resting respectively on the panel and on that part (15B) of the vertical wall (15) positioned along the longitudinal axis (F) of the valve body passage (4).

## Patentansprüche

1. Kompensationsventil zum Ausgleichen des Drucks von Umgebungen, wie Kühlräumen, worin der Druck dem Druck einer Außenumgebung, wie einer Umgebung bei Atmosphärendruck, nicht entspricht, wobei die Umgebung bei nicht entsprechendem, auszugleichendem Druck durch Wände (100) begrenzt ist, wobei in mindestens eine davon eine das Ventilgehäuse (1) enthaltende Durchbohrung (F) vorhanden ist, wobei das Ventilgehäuse einen Innendurchgang (4) aufweist, der an einem Ende (3) in die Umgebung bei nicht entsprechendem Druck mündet und an dem anderen Ende (5) mit dem Äußeren der genannten Umgebung kommuniziert, wobei das genannte Ventil in dem genannten Durchgang (4) ein Ventilelement (8) umfasst, das zwei Öffnungen (12) aufweist, die die genannten Enden (3, 5) des Ventilgehäuses (1) verbinden können, wobei ein bewegbares Abfangelement (13) an jeder der genannten Öffnungen angeordnet ist, wobei jede Öffnung (12) in einem entsprechenden Bereich (11) des Ventilelement (8) vorhanden ist, wobei der genannte Bereich (11) auf einer Ebene (P) innerhalb des Durchgangs (4) des Ventilgehäuses (1) liegt, wobei die genannte Ebene senkrecht zu der Wand (100), wo das Ventil angeordnet ist, verläuft, wobei die genannte bewegbare Platte (13) an der Öffnung des entsprechenden Bereichs (11) vorhanden ist, wobei die genannte Platte längs eines Rands (23) des diese Öffnung bestimmenden Bereichs angelenkt ist, **dadurch gekennzeichnet, dass** das Ventilelement (8) eine erste sowie eine zweite Portion (9, 10) umfasst, die gleich und zueinander symmetrisch sind, wobei die genannten Portionen den Durchgang in vier "Quadranten" aufteilt, wobei jede Portion (9, 10) einen Bereich (11) mit seiner eigenen Öffnung (12) umfasst, wobei jedes übereinanderliegende Paar von Quadranten durch die entsprechende Öffnung (12) mit dem Inneren der Umgebung und mit der Außenumgebung verbunden ist, so dass die Luft von dem Äußeren der Umgebung bis zu deren Inneren oder umgekehrt fließen kann, wobei die Abfangplatten (13) auf den entsprechenden Öffnungen (12) angeordnet sind, die sich in derselben Richtung um die Ebene (P), wo die genannten Bereiche (11) liegen, öffnen, wobei jeder der genannten Platten (13) auf einer waagerechten Ebene liegt, die zu der Umgebungswand (100) senkrecht verläuft, wenn die Platte (13) die genannte Öffnung (12) schließt.

2. Ventil nach Anspruch 1, **dadurch gekennzeichnet, dass** jeder mit der Öffnung (12) versehenen Bereich (11) einen Teil einer entsprechenden Portion (9, 10) des genannten Ventilelement (8) bildet, wobei jede Platte (13) entsprechend einer obigen Seite (9A, 10A) dieser Portion bewegbar ist, wobei diese Portion kleinere, durch eine größere Seite (17) miteinander verbundene Seiten (16A, 168) umfasst, wobei längs einer (16A) der kleineren Seiten sowie längs der größeren Seite (17) eine entsprechende vertikale Wand (15) steht, wobei diese Wand (15) einen ersten, längs der genannten einer (16A) der kleineren Seiten angeordneten Teil (15A) hat, wobei der genannte erste Teil (15A) den Durchgang (4) senkrecht abfängt, wobei die genannte vertikale Wand (15) einen zweiten, längs einer Längsachse (F) des genannten Durchgangs (4) sowie längs der größte Seite (17) angeordneten Teil (15B) hat, wobei die genannten Teile der Wand (15A, 15B) den genannten Durchgang (4) in den vier Quadranten aufteilen, wobei die Platte (13) in der Nähe des zweiten Teils der Wand (15B), längs der Längsachse (F) angelenkt ist, wobei das Ventilelement (8) zwei identische Portionen (9, 10) umfasst, die symmetrisch um einer Ebene verlaufen, wobei diese Ebene zu der Ebene (P), worin jeder mit der Öffnung (12) versehene und die mittlere Längsachse (F) des Durchgangs (4) des Ventilgehäuses enthaltende Bereich (11) liegt, senkrecht ist, wobei diese Bereiche auf derselben Ebene (P) liegen.

3. Ventil nach Anspruch 1, **dadurch gekennzeichnet, dass** die Ebene (P), worin der Bereich (11) des mit der Öffnung (12) versehenen Ventilelements (8) liegt, die mittlere Längsachse (F) des Durchgangs (4) des Ventilgehäuses enthält.

4. Ventil nach Anspruch 1, **dadurch gekennzeichnet, dass** ein Heizelement (19) und ein Dichtelement (14A) längs des Rands (14) der Öffnung (12) vorhanden sind.

5. Ventil nach Anspruch 1, **dadurch gekennzeichnet, dass** ein elastisches Element (27) vorhanden ist, um die Platte (13) auf der entsprechenden Öffnung (12) in einem geschlossenen Zustand zu halten und der Bewegung davon entgegenzuwirken.

6. Ventil nach Anspruch 1, **dadurch gekennzeichnet, dass** das elastische Element eine Drehfeder (27) ist, die um einen Zapfen (38) liegt, der durch die Platte (13) getragen wird und entsprechend dem Rand (23) des die Öffnung (12) bestimmenden Bereichs (11) angeordnet ist, wobei die Endarme (28, 29) der genannten Feder auf der Platte beziehungsweise auf dem längs der Längsachse (F) des Durchgangs (4) des Ventilgehäuses angeordneten Teil (15B) der vertikalen Wand (15) aufliegen.

## Revendications

1. Soupape de compensation pour équilibrer la pression d'environnements, tels qu'une chambre froide, dans laquelle la pression est différente de la pression d'un environnement extérieur, tel qu'un environnement à pression atmosphérique, où l'environnement ayant la pression différente à équilibrer est délimité par des parois (100), dans au moins une desquelles un trou traversant (100F) est prévu, contenant le corps de la soupape (1), ce corps de la soupape présentant un passage intérieur (4) qui s'ouvre à une extrémité (3) dans l'environnement ayant la pression différente et qui communique à l'extrémité opposée (5) avec l'extérieur dudit environnement, ladite soupape comprenant dans ledit passage (4) un élément de soupape (8) présentant deux ouvertures (12) en mesure de relier ensemble lesdites extrémités (3, 5) du corps de la soupape (1), un panneau d'interception mobile (13) étant situé sur chacune desdites ouvertures, chaque ouverture (12) étant prévue à l'intérieur d'une zone correspondante (11) de l'élément de soupape (8), ladite zone (11) étant agencée sur un plan (P) à l'intérieur du passage (4) du corps de la soupape (1), ledit plan étant perpendiculaire à la paroi (100) où la soupape est positionnée, ledit panneau mobile (13) étant prévu sur l'ouverture de la zone correspondante (11), ledit panneau étant articulé le long d'un bord (23) de la zone définissant cette ouverture, **caractérisée en ce que** l'élément de soupape (8) comprend une première et une seconde portion (9, 10) identiques et agencées symétriquement l'une par rapport à l'autre, lesdites portions divisant le passage en quatre "quadrants", chaque portion (9, 10) comprenant une
zone (11) avec son ouverture (12), chaque paire superposée de quadrants étant alternativement reliée moyennant l'ouverture correspondante (12) à l'intérieur de l'environnement et à l'environnement extérieur, de sorte à consentir le passage de l'air de l'extérieur de l'environnement à son intérieur ou vice versa, les panneaux d'interception (13) positionnés sur les ouvertures correspondantes (12) s'ouvrant dans la même direction autour du plan (P) où se trouvent lesdites zones (11), chacun desdits panneaux (13) se trouvant sur un plan horizontal qui est un plan perpendiculaire à la paroi de l'environnement (100) lorsque le panneau (13) ferme ladite ouverture (12).

2. Soupape selon la revendication 1, **caractérisée en ce que** chaque zone (11) pourvue de l'ouverture (12) forme une partie d'une portion correspondante (9, 10) dudit élément de soupape (8), chaque panneau (13) étant mobile au niveau d'un côté supérieur (9A, 10A) de cette portion, cette portion comprenant des côtés d'extension plus petite (16A, 168) reliés entre eux par un côté d'extension plus grande (17), une paroi verticale (15) correspondante s'élevant le long d'un (16A) des côtés d'extension plus petite et le long du côté d'extension plus grande (17), cette paroi (15) ayant une première partie (15A) située le long dudit un (16A) des côtés d'extension plus petite, ladite première partie (15A) interceptant perpendiculairement le passage (4), ladite paroi verticale (15) ayant une seconde partie (15B) agencée le long d'un axe longitudinal (F) dudit passage (4) et le long du côté d'extension maximale (17), lesdites parties de la paroi (15A, 15B) divisant ledit passage (4) en les quatre quadrants, le panneau (13) étant articulé à proximité de la seconde partie de la paroi (15B), le long de l'axe longitudinal (F), l'élément de soupape (8) comprenant deux portions identiques (9, 10) agencées symétriquement autour d'un plan perpendiculaire au plan (P) où se trouve chaque zone (11) pourvue de l'ouverture (12) et contenant l'axe longitudinal moyen (F) du passage (4) du corps de la soupape, ces zones se trouvant sur le même plan (P).

3. Soupape selon la revendication 1, **caractérisée en ce que** le plan (P) où se trouve la zone (11) de l'élément de soupape (8) pourvue de l'ouverture (12) contient l'axe longitudinal moyen (F) du passage (4) du corps de la soupape.

4. Soupape selon la revendication 1, **caractérisée en ce qu'**un élément de chauffage (19) et un élément d'étanchéité (14A) sont prévus le long du bord (14) de l'ouverture (12).

5. Soupape selon la revendication 1, **caractérisée en ce qu'**un élément élastique (27) est prévu pour maintenir le panneau (13) fermé sur l'ouverture correspondante (12) et s'opposer à son mouvement sur elle.

6. Soupape selon la revendication 1, **caractérisée en ce que** l'élément élastique est un ressort de torsion (27) agencé autour d'une tige (38) soutenue par le panneau (13) et positionnée au niveau du le bord (23) de la zone (11) définissant l'ouverture (12) de celle-ci, les bras d'extrémité (28, 29) dudit ressort s'appuyant respectivement sur le panneau et sur cette partie (15B) de la paroi verticale (15) positionnée le long de l'axe longitudinal (F) du passage (4) du corps de la soupape.
